# EUROPEAN PATENT APPLICATION

(11) **EP 1 271 498 A2**
(43) Date of publication of application: **02.01.2003**
(21) Application number: 02254260.9
(22) Date of filing: 19.06.2002
(51) Int. Cl.: G11B 7/22

(54) **Method of fixing a laser diode**

(30) Priority: 19.06.2001 JP 2001184409
(71) Applicant: Mitsumi Electric Co., Ltd., Chofu-shi, Tokyo (JP)
(72) Inventor: Negoro, Kenichi, c/o Mitusumi Electric Co. Ltd., Atsugi-shi, Kanagawa (JP)
(74) Representative: Moir, Michael Christopher

(57) **Abstract**

In order to fix a laser diode 2 to an optical base 1, a block 4 is at first fixed to the optical base at a position around a laser diode mounting area 3. Then, the block and the laser diode are made to generate heat by energizing a coil 7 of a high-frequency heater. Under the heat generated from the block and the laser diode, the laser diode is soldered and fixed to the block by the use of a solder 6.

## Description

### Background of the Invention:

This invention relates to a method of fixing a laser diode to an optical base of an optical pickup or the like.

As a recording medium for use with an electronic apparatus such as a personal computer, a CD-R (compact disc recordable) and a CD-RW (compact disc rewritable) are known. The CD-R is a recording medium which allows an additional writing operation to be repeatedly carried out. The CD-RW is a recording medium which allows a rewriting operation to be repeatedly carried out. Each of the CD-R and the CD-RW is compatible with a CD-ROM (compact disk read only memory), a CD-DA (compact disk digital audio), a DVD-ROM (digital versatile disk read only memory), and a DVD-RAM (digital versatile disk random access memory). Writing into the CD-R or the CD-RW requires a special apparatus and a writing application program. On the other hand, reading from the CD-R or the CD-RW can be executed by an ordinary CD-ROM drive. In the present specification, the CD-R, the CD-RW, the CD-DA, the DVD-ROM, and the DVD-RAM may collectively be called an optical disk.

In order to write and read data into and from the optical disk, an optical pickup is used. The optical pickup of the type comprises a laser diode for emitting a laser beam and an optical system for directing the laser beam to the optical disk. Typically, the laser diode and the optical system are fixed to a common optical base.

Existing methods of fixing the laser diode are classified into first through third methods as follows:
(1) To simply fit the laser diode to the optical base.
(2) To provide the laser diode with a flange and to adjust only angles of the laser diode in several directions (in many cases, only in a horizontal direction).
(3) To position the laser diode by 5 axes 3D adjustment known in the art and to fix the laser diode by the use of an adhesive.

However, the first through the third methods have disadvantages which will be described below.

The first method can be executed at a low cost with a simple structure. However, it is difficult to improve the positional accuracy.

The second method is excellent in heat release because heat generated from the laser diode is diffused via the flange. However, this method requires a complicated mechanism so that the adjustment in multiple directions is difficult and a large space is required.

The third method is excellent in fixing accuracy but is poor in heat release. Therefore, this method is not suitable for a high-output laser diode.

### Summary of the Invention:

It is therefore an object of this invention to provide a laser diode fixing method which is capable of easily improving a positional accuracy, which can be implemented by a simple structure, and which does not inhibit heat release.

Other objects of the present invention will become clear as the description proceeds.

According to a first aspect of the invention there is provided a method of fixing a laser diode to an optical base by a soldered joint comprising melting solder to form said joint by high frequency heating of structure to which the diode is to be fixed.

According to another aspect of the invention, there is provided a laser diode fixing method of fixing a laser diode to an optical base, wherein the method comprises the steps of fixing a block to the optical base at a position around an area where the laser diode is to be mounted, making the block and the laser diode generate heat by the use of a high-frequency heater, and soldering and fixing the laser diode to the block by the use of a solder under the heat generated from the block and the laser diode.

Prior to the soldering step, the position and the angle of the laser diode with respect to the optical base may be adjusted.

The adjustment of the position and the angle of the laser diode may be carried out by 5 axes 3D adjustment.

The block may be subjected to highly-solderable plating.

The block has an inner surface to face the laser diode. The inner surface may have a shape similar to that of a peripheral surface of the laser diode.

The optical base may be provided in an optical pickup.

The high-frequency heater may have a frequency on the order of megahertz.

### Brief Description of the Drawing:

A laser diode fixing method according to this invention will hereinafter be described with reference to the annexed drawings in which:
Fig. 1 is a perspective view of an optical base before a laser diode is fixed thereto;
Fig. 2 is a perspective view for describing an operation of fixing the laser diode; and
Fig. 3 is a perspective view of the optical base after the laser diode is fixed thereto.

### Description of the Preferred Embodiment:

Now, a laser diode fixing method according to an embodiment of this invention will be described with reference to the drawing.

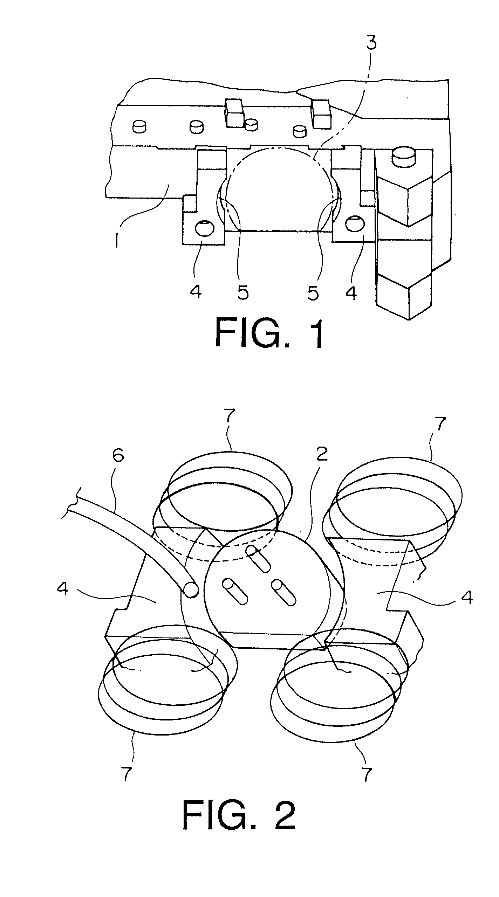

At first referring to Fig. 1, an optical base 1 is made of a metal and is adapted to receive a laser diode (depicted by 2 in Fig. 2). Specifically, the optical base 1 has a mounting area 3 formed at a predetermined position where the laser diode 2 is to be mounted. To the optical base 1, a pair of metallic blocks 4 are fixed at two angularly spaced positions around the mounting area 3. Each of the blocks 4 has an inner surface 5 to face the laser diode 2. The inner surface 5 is preferably formed into a shape similar to that of a peripheral surface of the laser diode 2, for example, into a cylindrical shape. The optical base 1 is included in an optical pickup which is used for writing and reading data into and from an optical disk in the manner known in the art.

Referring to Fig. 2 in addition to Fig. 1, the laser diode 2 is attached to the optical base 1. At first, the laser diode 2 is placed in the mounting area 3. Then, the laser diode 2 is placed at an optimum position and oriented at an optimum angle through 5 axes 3D adjustment known in the art.

Thereafter, a solder 6 is interposed between the metallic peripheral surface of the laser diode 2 and each block 4. By the use of a high-frequency heater which will be described below, each block 4 is made to generate heat. Under the heat, soldering is performed. As a consequence, the laser diode 2 is securely fixed to the optical base 1 at the optimum position and at the optimum angle. As the solder 6, a so-called wire solder can be used.

The high-frequency heater used herein comprises a plurality of coils 7 arranged adjacent to the blocks 4. When the coils 7 are supplied with a high-frequency current, each block 4 generates heat according to the principle of so-called induction heating. Preferably, the high-frequency current on the order of megahertz is used because the blocks 4 and the laser diode 2 are heated only at and around their surfaces. When the solder 6 reaches a melting temperature, the solder 6 interposed between the laser diode 2 and each block 4 is melted. Thereafter, the solder 6 is cooled and solidified so that the laser diode 2 is fixed to the optical base 1. After the laser diode 2 is fixed to the optical base 1, the high-frequency heater is removed.

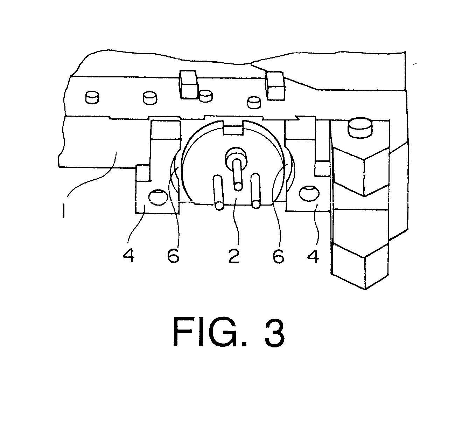

Referring to Fig. 3, the laser diode 2 is fixed to the optical base 1.

By the use of the high-frequency heater as described above, non-contact heating is performed so that the laser diode 2 is prevented from being dislocated. In addition, the laser diode 2 is soldered in a short time.

With the above-mentioned structure, even if the laser diode 2 generates heat, the heat is diffused from the laser diode 2 through the blocks 4 to the optical base 1. Thus, the laser diode 2 is prevented from being heated to a high temperature. Therefore, even in case of a high-output laser diode, no problem will occur.

The inner surface 5 of each block 4 to face the laser diode 2 has a shape similar to that of the peripheral surface of the laser diode 2. Therefore, the solder is widely spread over the peripheral surface of the laser diode 2. Accordingly, the laser diode 2 and the blocks 4 are securely soldered.

The method of this invention can be implemented simply by the use of the two blocks 4. Therefore, the increase in parts cost is suppressed.

Since this method requires only the two blocks as additional components, a space-saving effect is achieved. Therefore, this method is applicable to a pickup used in a thin-profile drive for driving the optical disk.

In the foregoing description, the metallic blocks 4 are used. Preferably, the blocks 4 are preliminarily subjected to highly-solderable plating, for example, copper plating.

On the other hand, the laser diode 2 is preferably subjected to highly-solderable plating, for example, gold plating, at least on its peripheral surface.

In the foregoing description, the number of blocks 4 is equal to two. Alternatively, this method can be implemented by the use of only one of the left and the right blocks 4. Further alternatively, three or more blocks may be used.

It will readily be understood that this invention is not restricted to the above-mentioned embodiment but may be modified in various other manners within the scope of this invention.

As described above, according to this invention, it is possible to provide a laser diode fixing method which is capable of easily improving a positional accuracy, which can be implemented by a simple structure, and which does not inhibit heat release. Furthermore, it is possible to provide an optical pickup improved in performance because the laser diode can be fixed without dislocation. Since the soldering is performed in a short time, the process is shortened and the cost is reduced.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims. Reference numerals appearing in the claims are illustrative only and the claims shall be interpreted as if they are not present.

The description of the invention with reference to the drawings is by way of example only.

The text of the abstract filed herewith is repeated here as part of the specification. In order to fix a laser diode 2 to an optical base 1, a block 4 is at first fixed to the optical base at a position around a laser diode mounting area 3. Then the block and the laser diode are made to generate heat by energizing a coil 7 of a high-frequency heater. Under the heat generated from the block and the laser diode, the laser diode is soldered and fixed to the block by use of a solder 6.

## Claims

1. A method of fixing a laser diode (2) to an optical base (1) by a soldered joint comprising melting solder to form said joint by high frequency heating of structure to which the diode is to be fixed.

2. A method according to claim 1 wherein heat to melt the solder is generated by high frequency heating of a block displaced adjacent the diode.

3. A method according to claim 1 wherein said method comprises the steps of fixing a block (5) to said optical base at a position around an area (3) where said laser diode is to be mounted, generating heat in the block and the diode by high frequency heating, and fixing said diode to said block by the use of solder melted by the heat so generated.

4. A method according to claim 2 or claim 3 wherein said block is subjected to highly - solderable plating.

5. A method according to any one of claims 2 to 4 wherein said block has an inner surface facing said laser diode, said inner surface having a shape similar to that of a peripheral surface of said laser diode.

6. A method according to any one of the preceding claims wherein the position and the angle of said laser diode with respect to said optical base are adjusted prior to the soldering step.

7. A method according to claim 6 wherein the adjustment of the position and the angle of said laser diode is carried out by 5-axis 3D adjustment.

8. A method according to any one of the preceding claims wherein said optical base is provided in an optical pickup.

9. A method according to any one of the preceding claims wherein said high - frequency heater has a frequency on the order of megahertz.
